# EUROPEAN PATENT APPLICATION

(11) **EP 4 568 219 A1**
(43) Date of publication of application: **11.06.2025**
(21) Application number: 23859147.3
(22) Date of filing: 15.08.2023
(51) Int. Cl.: H04L 41/16, H04W 8/22

(54) **WIRELESS COMMUNICATION METHOD AND COMMUNICATION APPARATUS**

(30) Priority: 29.08.2022 CN 202211039259
(71) Applicant: Huawei Technologies Co., Ltd., Shenzhen, Guangdong 518129 (CN)
(72) Inventor: GENG, Tingting, Shenzhen, Guangdong 518129 (CN); ZENG, Yu, Shenzhen, Guangdong 518129 (CN); CHEN, Jun, Shenzhen, Guangdong 518129 (CN)
(74) Representative: Pfenning, Meinig & Partner mbB
(86) International application number: PCT/CN2023/113109
(87) International publication number: WO 2024/046113

(57) **Abstract**

This application provides a wireless communication method and a communication apparatus. In the method, a terminal device reports, to a radio access network device, one or more groups of AI capability information supported by the terminal device, and the radio access network device determines AI resource requirement information respectively corresponding to the one or more groups of AI capability information, and can further determine, based on the AI resource requirement information, how to perform AI configuration for the terminal device. In this way, the terminal device can properly and effectively use an AI function, thereby improving efficiency of collaboration between the terminal device and the radio access network device.

## Description

### CROSS-REFERENCE TO RELATED APPLICATIONS

This application claims priority to Chinese Patent Application No. 202211039259.8, filed with the China National Intellectual Property Administration on August 29, 2022 and entitled "WIRELESS COMMUNICATION METHOD AND COMMUNICATION APPARATUS", which is incorporated herein by reference in its entirety.

### TECHNICAL FIELD

This application relates to the field of wireless communication technologies, and in particular, to a wireless communication method and a communication apparatus.

### BACKGROUND

Artificial intelligence (artificial intelligence, AI) is a technology for performing complex computing by simulating a human brain. With the improvement of data storage and computing capabilities, artificial intelligence is increasingly used. The 3rd Generation Partnership Project (3rd generation partnership project, 3GPP) proposes to apply artificial intelligence to a 5th generation (5th generation, 5G) communication system, to improve network performance and user experience through intelligent collection and data analysis.

However, how to properly and effectively use an AI function in 5G and future communication systems to improve efficiency of collaboration between a terminal device and a radio access network device needs to be resolved.

### SUMMARY

This application provides a wireless communication method and a communication apparatus, to improve efficiency of collaboration between a terminal device and a radio access network device.

According to a first aspect, an embodiment of this application provides a wireless communication method. The method may be performed by a radio access network device or a module (for example, a chip) used in a radio access network device. The method includes: The radio access network device receives first capability information of a terminal device, where the first capability information includes at least one group of AI capability information supported by the terminal device; and the radio access network device determines, based on the first capability information, AI resource requirement information respectively corresponding to the at least one group of AI capability information.

In the foregoing solution, the terminal device reports, to the radio access network device, one or more groups of AI capability information supported by the terminal device, and the radio access network device determines AI resource requirement information respectively corresponding to the one or more groups of AI capability information, and can further determine, based on the AI resource requirement information, how to perform AI configuration for the terminal device. In this way, the terminal device can properly and effectively use an AI function, thereby improving efficiency of collaboration between the terminal device and the radio access network device.

In a possible implementation, that the radio access network device determines, based on the first capability information, the AI resource requirement information respectively corresponding to the at least one group of AI capability information includes: The radio access network device determines, based on the first capability information and a predefined correspondence, AI resource requirement information respectively corresponding to at least one piece of AI capability information, where the predefined correspondence includes a correspondence between the at least one piece of AI capability information and the AI resource requirement information.

In the foregoing solution, the correspondence between the AI capability information and the AI resource requirement information is predefined, so that the radio access network device can quickly and accurately determine, based on the correspondence, the AI resource requirement information respectively corresponding to the at least one group of AI capability information in the first capability information sent by the terminal device. This helps accurately determine the AI configuration information for the terminal device.

In a possible implementation, the radio access network device receives second capability information of the terminal device, where the second capability information indicates information about an AI resource that the terminal device is able to provide; the radio access network device determines first AI configuration information based on the second capability information and the AI resource requirement information respectively corresponding to the at least one group of AI capability information, where the first AI configuration information corresponds to one or more groups of AI capability information in the at least one group of AI capability information; and the radio access network device sends the first AI configuration information to the terminal device.

In the foregoing solution, because the first AI configuration information is generated based on the at least one group of AI capability information supported by the terminal device, the terminal device supports the first AI configuration information. This helps implement correct AI configuration for the terminal device.

In a possible implementation, the radio access network device receives notification information from the terminal device, where the notification information includes at least one of information about an AI resource occupied by the terminal device, information about a remaining AI resource of the terminal device, and expected AI configuration information.

In a possible implementation, the radio access network device determines second AI configuration information based on the notification information and the first capability information, where the second AI configuration information corresponds to one or more groups of AI capability information in the at least one group of AI capability information; and the radio access network device sends the second AI configuration information to the terminal device.

In the foregoing solution, the AI configuration information can be updated for the terminal device, so that the terminal device uses an AI function more properly and effectively based on the updated AI configuration information, thereby meeting a communication requirement between the terminal device and the radio access network device and improving efficiency of collaboration between the terminal device and the radio access network device.

In a possible implementation, the radio access network device sends first indication information to the terminal device, where the first indication information indicates a trigger condition for reporting the notification information.

In a possible implementation, the radio access network device receives second indication information from the terminal device, where the second indication information indicates to deactivate the AI configuration information of the terminal device; and the radio access network device deactivates the AI configuration information of the terminal device based on the second indication information.

In the foregoing solution, when the terminal device does not need to use an AI function, the AI configuration information of the terminal device may be deactivated. This helps reduce energy consumption of the terminal device.

In a possible implementation, that the radio access network device receives the first capability information of the terminal device includes: The radio access network device receives the first capability information from another radio access network device, the terminal device, or a core network device.

In a possible implementation, that the radio access network device receives the second capability information of the terminal device includes: The radio access network device receives the second capability information from another radio access network device, the terminal device, or a core network device.

According to a second aspect, an embodiment of this application provides a wireless communication method. The method may be performed by a terminal device or a module (such as a chip) used in a terminal device. The method includes: The terminal device determines first capability information, where the first capability information includes at least one group of AI capability information supported by the terminal device; and the terminal device sends the first capability information to a radio access network device.

In the foregoing solution, the terminal device reports, to the radio access network device, one or more groups of AI capability information supported by the terminal device, and the radio access network device may determine, based on the one or more groups of AI capability information supported by the terminal device, how to perform AI configuration for the terminal device. In this way, the terminal device can properly and effectively use an AI function, thereby improving efficiency of collaboration between the terminal device and the radio access network device.

In a possible implementation, the terminal device sends second capability information to the radio access network device, where the second capability information indicates information about an AI resource that the terminal device is able to provide; and the terminal device receives first AI configuration information from the radio access network device, where the first AI configuration information is determined based on the second capability information and the AI resource requirement information respectively corresponding to the at least one group of AI capability information, and the first AI configuration information corresponds to one or more groups of AI capability information in the at least one group of AI capability information.

In the foregoing solution, because the first AI configuration information is generated based on the at least one group of AI capability information supported by the terminal device, the terminal device supports the first AI configuration information. This helps implement correct AI configuration for the terminal device.

In a possible implementation, the terminal device determines that a trigger condition is met, and sends notification information to the radio access network device, where the notification information includes at least one of information about an AI resource occupied by the terminal device, information about a remaining AI resource of the terminal device, and expected AI configuration information; and the trigger condition includes: The information about the AI resource occupied by the terminal device is greater than a first threshold, and/or the information about the remaining AI resource of the terminal device is less than a second threshold.

In a possible implementation, the terminal device receives second AI configuration information from the radio access network device, where the second AI configuration information is determined based on the notification information and the first capability information, and the second AI configuration information corresponds to one or more groups of AI capability information in the at least one group of AI capability information.

In the foregoing solution, the AI configuration information can be updated for the terminal device, so that the terminal device uses an AI function more properly and effectively based on the updated AI configuration information, thereby meeting a communication requirement between the terminal device and the radio access network device and improving efficiency of collaboration between the terminal device and the radio access network device.

In a possible implementation, the terminal device receives first indication information from the radio access network device, where the first indication information indicates the trigger condition for reporting the notification information, and the first indication information includes the first threshold and/or the second threshold.

In a possible implementation, the terminal device sends second indication information to the radio access network device, where the second indication information indicates to deactivate the AI configuration information of the terminal device.

In the foregoing solution, when the terminal device does not need to use an AI function, the AI configuration information of the terminal device may be deactivated. This helps reduce energy consumption of the terminal device.

Based on any implementation of the first aspect and the second aspect:
In a possible implementation, each group of AI capability information includes at least one of an AI function, an AI sub-function, a collaboration level, an AI model, or an AI algorithm supported by the terminal device.

In a possible implementation, each group of AI capability information includes at least two pieces of AI capability information, and there is a correspondence between the at least two pieces of AI capability information.

In the foregoing solution, there is a correspondence between a plurality of pieces of AI capability information in a same group. Therefore, when generating the AI configuration information, the radio access network device performs combinational configuration based on the AI capability information in the same group, to avoid generating an AI configuration that is not supported by the terminal device, and help reduce occurrence of an incorrect configuration.

In a possible implementation, the first capability information further includes the AI resource requirement information respectively corresponding to the at least one group of AI capability information, or index information of the AI resource requirement information respectively corresponding to the at least one group of AI capability information.

In a possible implementation, the information about the AI resource that the terminal device is able to provide includes at least one of maximum computing capability information of the terminal device, maximum storage capability information of the terminal device, maximum battery level information of the terminal device, processing delay information of the terminal device, information about the AI model supported by the terminal device, or information about the AI algorithm supported by the terminal device.

According to a third aspect, an embodiment of this application provides a wireless communication method. The method may be performed by a radio access network device or a module (for example, a chip) used in a radio access network device. The method includes: The radio access network device receives first capability information of a terminal device, where the first capability information includes one group of AI capability information or combination information of at least two groups of AI capability information supported by the terminal device within a range of an AI resource indicated by second capability information, and the second capability information indicates information about an AI resource that the terminal device is able to provide; the radio access network device determines first AI configuration information based on the first capability information, where the first AI configuration information corresponds to one or more groups of AI capability information in the one group of AI capability information or the combination information of the at least two groups of AI capability information; and the radio access network device sends the first AI configuration information to the terminal device.

In the foregoing method, because the first AI configuration information is generated based on the AI capability information supported by the terminal device, the terminal device supports the first AI configuration information. This helps implement correct AI configuration for the terminal device, thereby improving efficiency of collaboration between the terminal device and the radio access network device.

In a possible implementation, the radio access network device receives notification information from the terminal device, where the notification information includes at least one of information about an AI resource occupied by the terminal device, information about a remaining AI resource of the terminal device, and expected AI configuration information.

In a possible implementation, the radio access network device determines second AI configuration information based on the notification information and the first capability information, where the second AI configuration information corresponds to one or more groups of AI capability information in the one group of AI capability information or combination information of the at least two groups of AI capability information; and the radio access network device sends the second AI configuration information to the terminal device.

In the foregoing solution, the AI configuration information can be updated for the terminal device, so that the terminal device uses an AI function more properly and effectively based on the updated AI configuration information, thereby meeting a communication requirement between the terminal device and the radio access network device and improving efficiency of collaboration between the terminal device and the radio access network device.

In a possible implementation, the radio access network device sends first indication information to the terminal device, where the first indication information indicates a trigger condition for reporting the notification information.

In a possible implementation, the radio access network device receives second indication information from the terminal device, where the second indication information indicates to deactivate the AI configuration information of the terminal device; and the radio access network device deactivates the AI configuration information of the terminal device based on the second indication information.

In a possible implementation, that the radio access network device receives the first capability information of the terminal device includes: The radio access network device receives the first capability information from another radio access network device, the terminal device, or a core network device.

According to a fourth aspect, an embodiment of this application provides a wireless communication method. The method may be performed by a terminal device or a module (such as a chip) used in a terminal device. The method includes: The terminal device determines first capability information based on second capability information, where the first capability information includes at least one group of AI capability information or combination information of at least two groups of AI capability information supported by the terminal device within a range of an AI resource indicated by the second capability information, and the second capability information indicates information about an AI resource that the terminal device is able to provide; and the terminal device sends the first capability information to a radio access network device.

In the foregoing solution, the terminal device reports, to the radio access network device, the AI capability information supported by the terminal device, and the radio access network device may determine, based on the AI capability information supported by the terminal device, how to perform AI configuration for the terminal device. In this way, the terminal device can properly and effectively use an AI function, thereby improving efficiency of collaboration between the terminal device and the radio access network device.

In a possible implementation, the information about the AI resource that the terminal device is able to provide includes at least one of maximum computing capability information of the terminal device, maximum storage capability information of the terminal device, maximum battery level information of the terminal device, processing delay information of the terminal device, information about the AI model supported by the terminal device, or information about the AI algorithm supported by the terminal device.

In a possible implementation, the terminal device determines that a trigger condition is met, and sends notification information to the radio access network device, where the notification information includes at least one of information about an AI resource occupied by the terminal device, information about a remaining AI resource of the terminal device, and expected AI configuration information; and the trigger condition includes: The information about the AI resource occupied by the terminal device is greater than a first threshold, and/or the information about the remaining AI resource of the terminal device is less than a second threshold.

In a possible implementation, the terminal device receives second AI configuration information from the radio access network device, where the second AI configuration information is determined based on the notification information and the first capability information, and the second AI configuration information corresponds to one or more groups of AI capability information in the one group of AI capability information or the combination information of the at least two groups of AI capability information.

In the foregoing solution, the AI configuration information can be updated for the terminal device, so that the terminal device uses an AI function more properly and effectively based on the updated AI configuration information, thereby meeting a communication requirement between the terminal device and the radio access network device and improving efficiency of collaboration between the terminal device and the radio access network device.

In a possible implementation, the terminal device receives first indication information from the radio access network device, where the first indication information indicates the trigger condition for reporting the notification information, and the first indication information includes the first threshold and/or the second threshold.

In a possible implementation, the terminal device sends second indication information to the radio access network device, where the second indication information indicates to deactivate the AI configuration information of the terminal device.

Based on any implementation of the third aspect and the fourth aspect:
In a possible implementation, each group of AI capability information includes at least one of an AI function, an AI sub-function, a collaboration level, an AI model, or an AI algorithm supported by the terminal device.

In a possible implementation, each group of AI capability information includes at least two pieces of AI capability information, and there is a correspondence between the at least two pieces of AI capability information.

In the foregoing solution, there is a correspondence between a plurality of pieces of AI capability information in a same group. Therefore, when generating the AI configuration information, the radio access network device performs combinational configuration based on the AI capability information in the same group, to avoid generating an AI configuration that is not supported by the terminal device, and help reduce occurrence of an incorrect configuration.

According to a fifth aspect, an embodiment of this application provides a communication apparatus. The apparatus may be a radio access network device, or may be a module (for example, a chip) used in a radio access network device. The apparatus has a function of implementing any implementation in the first aspect or the third aspect. The function may be implemented by using hardware, or may be implemented by executing corresponding software by hardware. The hardware or the software includes one or more modules corresponding to the foregoing function.

According to a sixth aspect, an embodiment of this application provides a communication apparatus. The apparatus may be a terminal device, or may be a module (for example, a chip) used in a terminal device. The apparatus has a function of implementing any implementation in the second aspect or the fourth aspect. The function may be implemented by using hardware, or may be implemented by executing corresponding software by hardware. The hardware or the software includes one or more modules corresponding to the foregoing function.

According to a seventh aspect, an embodiment of this application provides a communication apparatus, including a processor and a memory. The memory is configured to store computer instructions, and when the apparatus runs, the processor executes the computer instructions stored in the memory, to enable the apparatus to perform any implementation in the first aspect to the fourth aspect.

According to an eighth aspect, an embodiment of this application provides a communication apparatus, including units or means (means) configured to perform steps of any implementation in the first aspect to the fourth aspect.

According to a ninth aspect, an embodiment of this application provides a communication apparatus, including a processor and an interface circuit. The processor is configured to: communicate with another apparatus through an interface circuit, and perform any implementation in the first aspect to the fourth aspect. There are one or more processors.

According to a tenth aspect, an embodiment of this application provides a communication apparatus, including a processor coupled to a memory. The processor is configured to invoke a program stored in the memory, to perform any implementation in the first aspect to the fourth aspect. The memory may be located inside or outside the apparatus. In addition, there may be one or more processors.

According to an eleventh aspect, an embodiment of this application further provides a computer-readable storage medium. The computer-readable storage medium stores instructions, and when the instructions are run on a communication apparatus, any implementation in the first aspect to the fourth aspect is performed.

According to a twelfth aspect, an embodiment of this application further provides a computer program product. The computer program product includes a computer program or instructions, and when the computer program or the instructions are run by a communication apparatus, any implementation in the first aspect to the fourth aspect is performed.

According to a thirteenth aspect, an embodiment of this application further provides a chip system, including a processor, configured to perform any implementation in the first aspect or the third aspect.

According to a fourteenth aspect, an embodiment of this application further provides a chip system, including a processor, configured to perform any implementation in the second aspect or the fourth aspect.

According to a fifteenth aspect, an embodiment of this application further provides a communication system, including a radio access network device configured to perform any implementation of the first aspect and a terminal device configured to perform any implementation in the second aspect.

According to a sixteenth aspect, an embodiment of this application further provides a communication system, including a radio access network device configured to perform any implementation of the third aspect and a terminal device configured to perform any implementation in the fourth aspect.

### BRIEF DESCRIPTION OF DRAWINGS

FIG. 1 is a diagram of an architecture of a communication system to which an embodiment of this application is applied;
FIG. 2 is a schematic flowchart of a wireless communication method according to an embodiment of this application;
FIG. 3 is a schematic flowchart of a wireless communication method according to an embodiment of this application;
FIG. 4 is a schematic flowchart of a wireless communication method according to an embodiment of this application;
FIG. 5 is a schematic flowchart of a wireless communication method according to an embodiment of this application;
FIG. 6 is a schematic flowchart of a wireless communication method according to an embodiment of this application;
FIG. 7 is a schematic flowchart of a wireless communication method according to an embodiment of this application;
FIG. 8 is a diagram of a structure of a possible communication apparatus according to an embodiment of this application; and
FIG. 9 is a diagram of a structure of a possible communication apparatus according to an embodiment of this application.

### DESCRIPTION OF EMBODIMENTS

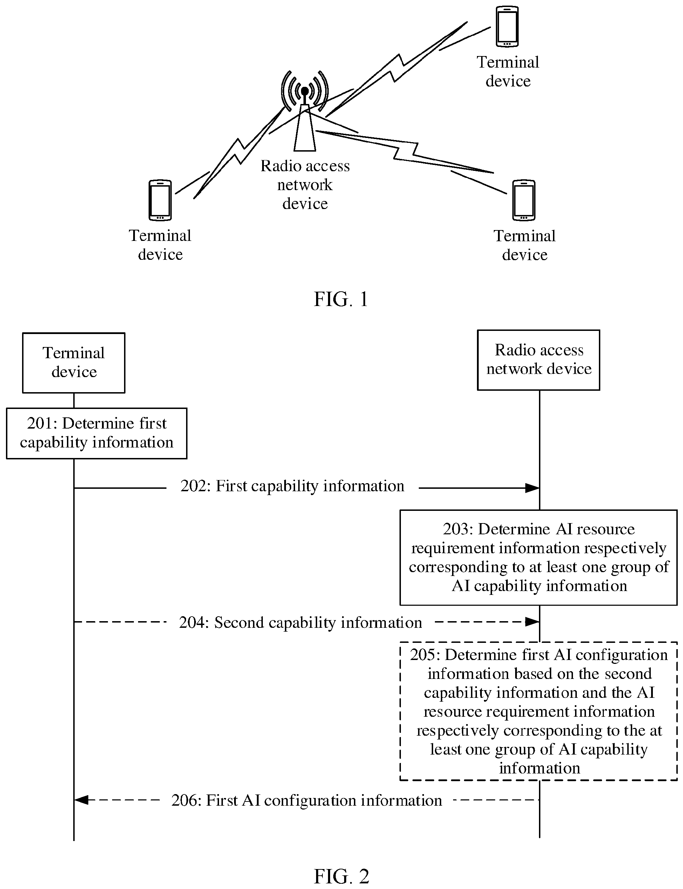

FIG. 1 is a diagram of an architecture of a communication system to which embodiments of this application are applied. The communication system includes terminal devices and a radio access network device. The communication system is applicable to a 5G communication network, a non-terrestrial network (non-terrestrial network, NTN), or a future communication network, for example, a 6th generation (6th generation, 6G) communication network.

The terminal device is a device having a wireless transceiver function. The terminal device may be deployed on land, including being deployed indoor or outdoor, handheld, or vehicle-mounted, may be deployed on water (for example, on a ship), or may be deployed in air (for example, on an airplane, a balloon, or a satellite). The terminal device may be a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control, a wireless terminal device in self-driving (self-driving), a wireless terminal device in telemedicine (telemedicine), a wireless terminal device in a smart grid (smart grid), a wireless terminal in transportation safety (transportation safety), a wireless terminal device in a smart city (smart city), a wireless terminal in a smart home (smart home), user equipment (user equipment, UE), or the like.

The radio access network (radio access network, RAN) device is a device that can connect the terminal device to a wireless network. The radio access network device may be a next-generation node (gNodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), integrated access and backhaul (integrated access and backhaul, IAB), or the like.

The radio access network device in embodiments of this application may alternatively be a central unit (central unit, CU) or a distributed unit (distributed unit, DU), or may include a CU and a DU. The CU and the DU may be understood as division of the radio access network device from a perspective of logical functions. The CU and the DU may be physically separated, or may be deployed together. This is not specifically limited in embodiments of this application. One CU may be connected to one DU, or a plurality of DUs may share one CU. The CU and the DU may be split based on a protocol stack. In a possible manner, a radio resource control (radio resource control, RRC) layer, a service data adaptation protocol (service data adaptation protocol, SDAP) stack, and a packet data convergence protocol (packet data convergence protocol, PDCP) layer are deployed on the CU, and other layers such as a radio link control (radio link control, RLC) layer, a media access control (media access control, MAC) layer, and a physical layer are deployed on the DU. The foregoing protocol stack-based division manner is not completely limited in the present invention, and there may be other division manners.

The radio access network device in embodiments of this application may alternatively be a central unit control plane (CU-CP) node or a central unit user plane (CU-UP) node, or may include a CU-CP and a CU-UP. The CU-CP is responsible for a control plane function, and mainly includes RRC and a PDCP-C. The PDCP-C is mainly responsible for encryption and decryption, integrity protection, data transmission, and the like of control plane data. The CU-UP is responsible for a user plane function, and mainly includes an SDAP and a PDCP-U. The SDAP is mainly responsible for processing data of a core network and mapping a flow (flow) to a bearer. The PDCP-U is mainly responsible for encryption and decryption, integrity protection, header compression, sequence number maintenance, data transmission, and the like on a data plane.

The radio access network device and the terminal device may be deployed on land, including being deployed indoor or outdoor, handheld, or vehicle-mounted, may be deployed on water, or may be deployed on an airplane, a balloon, and a satellite in the air. Application scenarios of the radio access network device and the terminal device are not limited in embodiments of this application.

Embodiments of this application may be applied to downlink signal transmission, or may be applied to uplink signal transmission. For downlink signal transmission, a sending device is the radio access network device, and a corresponding receiving device is the terminal device. For uplink signal transmission, a sending device is the terminal device, and a corresponding receiving device is the radio access network device. A signal transmission direction is not limited in embodiments of this application.

The radio access network device and the terminal device may communicate with each other through a licensed spectrum (licensed spectrum), may communicate with each other through an unlicensed spectrum (unlicensed spectrum), or may communicate with each other through both a licensed spectrum and an unlicensed spectrum. The radio access network device and the terminal device may communicate with each other through a spectrum below 6 gigahertz (gigahertz, GHz), may communicate with each other through a spectrum above 6G, or may communicate with each other through both a spectrum below 6G and a spectrum above 6G. A spectrum resource used between the radio access network device and the terminal device is not limited in embodiments of this application.

For ease of understanding solutions of this application, the following describes some nouns or terms in this application. The nouns or the terms also belong to a part of the present invention.

### 1. AI function

The AI function is also referred to as an AI application scenario. The AI function includes but is not limited to: channel state information reference signal (channel state information reference signal, CSI-RS) feedback enhancement (CSI-RS feedback enhancement), beam management enhancement (beam management enhancement), and positioning enhancement (positioning accuracy enhancement), which are separately described in the following. For example, one AI function may include a plurality of AI sub-functions.

### (1) CSI-RS feedback enhancement

A CSI-RS includes but is not limited to at least one of the following: a channel quality indicator (channel quality indicator, CQI), a precoding matrix indicator (precoding matrix indicator, PMI), a CSI-RS resource indicator (CSI-RS resource indicator, CRI), a layer indicator (layer indicator, LI), and a rank indicator (rank indicator, RI).

The CSI-RS feedback enhancement may include at least one sub-function, for example, CSI compression, CSI prediction, and CSI-RS configuration signaling reduction. The CSI compression may be further classified into CSI compression in at least one of space domain, time domain, and frequency domain.

### (2) Beam management enhancement

The beam management enhancement may include at least one sub-function, for example, beam sweeping matrix prediction and optimal beam prediction.

### (3) Positioning enhancement

The positioning enhancement is used to improve positioning accuracy. The positioning enhancement may include at least one sub-function, for example, access network device-based positioning enhancement, positioning management function network element-based positioning enhancement, and terminal device-based positioning enhancement.

### 2. Collaboration level of an AI model

Three possible types of collaboration levels (collaboration level) may be classified based on deployment of the AI model and interaction between a terminal device and a radio access network device.

### (1) Collaboration level 0 (level 0)

The collaboration level 0 is also referred to as no collaboration (no collaboration). At the collaboration level 0, an AI model of the radio access network device is completely invisible to the terminal device, training and inference of the AI model are completed inside the radio access network device, and information about the model or information about a model instance is not sent to the terminal device through an air interface.

### (2) Collaboration level 1 (level 1)

The collaboration level 1 is also referred to as signaling-based collaboration without model transfer (signaling-based collaboration without model transfer). At the collaboration level 1, in a possible implementation, the radio access network device sends, to the terminal device, an instance of an AI model, namely, a dictionary, and the terminal device uses the dictionary to assist the radio access network device in performing AI inference. This affects an air interface. The terminal device performs channel compression coding based on the dictionary. Optionally, an AI model may also be deployed in the terminal device. When the AI model is deployed in the terminal device, the terminal device performs channel compression coding based on the AI model and the dictionary received from the radio access network device. The terminal device and the radio access network device may jointly train a model, for example, train the model in a federated learning manner. The terminal device and the radio access network device do not directly transmit a model over an air interface, but may transmit a parameter, a weight, and the like of the model.

In embodiments of this application, that the terminal device or the radio access network device deploys an AI model may be understood as deploying a software module or a hardware module configured to implement a function of the AI model.

In addition, the collaboration level 1 may be classified into a collaboration level 1A and a collaboration level 1B based on model deployment.

The collaboration level 1A is also referred to as signaling-based collaboration for a single-sided node deployment model without model transfer (signaling-based collaboration for single-sided model without model transfer). In other words, an AI model is deployed on the radio access network device, and no AI model is deployed on the terminal device.

The collaboration level 1B is also referred to as signaling-based collaboration for a two-sided node deployment model without model transfer (signaling-based collaboration for two-sided model without model transfer). In other words, an AI model is deployed on both the radio access network device and the terminal device.

### (3) Collaboration level 2 (level 2)

The collaboration level 2 is also referred to as signaling-based collaboration with model transfer (signaling-based collaboration with model transfer). At the collaboration level 2, an AI model is deployed on both the radio access network device and the terminal device, and both the radio access network device and the terminal device may perform inference, and may exchange information about the AI model on an air interface. A difference between the collaboration level 2 and the collaboration level 1 includes: At the collaboration level 2, information about an AI model may be transmitted on an air interface.

To properly and effectively perform AI configuration for a terminal device, this application provides a wireless communication method. It may be understood that the method provided in this application may be performed by a terminal device and/or a radio access network device, or may be performed by a module (for example, a chip) used in a terminal device and/or a radio access network device. The following describes the wireless communication method provided in this application by using the terminal device and the radio access network device as execution bodies. FIG. 2 is a schematic flowchart of a wireless communication method according to an embodiment of this application. The method includes the following steps:
Step 201: The terminal device determines first capability information, where the first capability information includes at least one group of AI capability information supported by the terminal device.

Each group of AI capability information includes at least one piece of AI capability information. For example, each group of AI capability information includes at least one of an AI function, an AI sub-function, a collaboration level, an AI model, or an AI algorithm supported by the terminal device.

When each group of AI capability information includes at least two pieces of AI capability information, there is a correspondence between the at least two pieces of AI capability information, that is, the at least two pieces of AI capability information form a pairing relationship.

For example, the first capability information includes six groups of AI capability information:
a first group of AI capability information is CSI compression and a collaboration level 1;
a second group of AI capability information is CSI prediction and a collaboration level 2;
a third group of AI capability information is CSI-RS configuration signaling reduction and the collaboration level 2;
a fourth group of AI capability information is beam sweeping matrix prediction and the collaboration level 2;
a fifth group of AI capability information is optimal beam prediction and the collaboration level 1; and
a sixth group of AI capability information is terminal device-based positioning enhancement and the collaboration level 1.

There is a correspondence between content in each group of AI capability information. The first group of AI capability information is used as an example. The AI sub-function is the CSI compression, and a collaboration level corresponding to the CSI compression is the collaboration level 1. Specifically, the terminal device supports using the collaboration level 1 to implement the AI sub-function of the CSI compression, and there is a binding relationship or a collaboration relationship between the CSI compression and the collaboration level 1. For example, if no AI model is deployed in the terminal device, the radio access network device may send an instance of an AI model to the terminal device, and then the terminal device performs CSI compression based on the instance of the AI model, and sends compressed CSI to the radio access network device. In this way, CSI compression is performed between the terminal device and the radio access network device based on the collaboration level 1. For example, it may be determined, based on the second group of AI capability information, that there is a correspondence between the CSI prediction and the collaboration level 2, and it may be further determined that there is a correspondence between the CSI prediction and another collaboration level lower than the collaboration level 2. For example, it may be determined that there is a correspondence between the CSI prediction and a collaboration level 0 or the collaboration level 1. It may be understood that, in still another possible implementation, the first capability information may indicate information about an AI function or information about an AI sub-function and highest collaboration level information corresponding to the AI function or the AI sub-function.

Step 202: The terminal device sends the first capability information to the radio access network device. Correspondingly, the radio access network device receives the first capability information.

Step 203: The radio access network device determines, based on the first capability information, AI resource requirement information respectively corresponding to the at least one group of AI capability information.

The AI resource requirement information indicates AI resource information that is of the terminal device and that is required for activating one group of AI capability information of the terminal device. The AI resource information herein includes but is not limited to one or more of the following: required computing capability information, required storage capability information, required battery level information, required processing delay information, required AI model information, or required AI algorithm information.

In an implementation, the radio access network device may alternatively receive the first capability information of the terminal device from another radio access network device or a core network device. The another radio access network device may be a base station, a CU, a DU, or the like adjacent to the radio access network device. This is not limited in embodiments of this application. The core network device may be an access and mobility management function (access and mobility management function, AMF) network element, a session management function (session management function, SMF) network element, or the like. This is not limited in embodiments of this application. It may be understood that, in this implementation, step 201 and step 202 are optional steps.

In the foregoing solution, the terminal device reports, to the radio access network device, one or more groups of AI capability information supported by the terminal device, and the radio access network device determines AI resource requirement information respectively corresponding to the one or more groups of AI capability information, and can further determine, based on the AI resource requirement information, how to perform AI configuration for the terminal device. In this way, the terminal device can properly and effectively use an AI function, thereby improving efficiency of collaboration between the terminal device and the radio access network device.

The following describes different implementations of step 203.

Implementation 1: The first capability information further includes the AI resource requirement information respectively corresponding to the at least one group of AI capability information.

In this implementation, the first capability information includes the at least one group of AI capability information and the AI resource requirement information respectively corresponding to the at least one group of AI capability information. Therefore, the radio access network device may determine, based on the first capability information, the AI resource requirement information respectively corresponding to the at least one group of AI capability information.

Implementation 2: The first capability information further includes index information of the AI resource requirement information respectively corresponding to the at least one group of AI capability information.

In this implementation, the first capability information includes the at least one group of AI capability information and the index information of the AI resource requirement information respectively corresponding to the at least one group of AI capability information. Therefore, the radio access network device may determine, based on the first capability information, the index information of the AI resource requirement information respectively corresponding to the at least one group of AI capability information, and then determine, based on the index information of the AI resource requirement information respectively corresponding to the at least one group of AI capability information, the AI resource requirement information respectively corresponding to the at least one group of AI capability information.

In an example, the at least one group of AI capability information in the first capability information includes an AI sub-function and a collaboration level, and the index information of the AI resource requirement information in the first capability information includes index information of a required computing capability, index information of a required storage capability, and index information of a required AI model. Table 1 is an example of a correspondence between the AI capability information and the index information of the AI resource requirement information.

**Table 1**

| AI capability information | | Index information of AI resource requirement information | | |
|---|---|---|---|---|
| AI sub-function | Collaboration level | Index information of a required computing capability | Index information of a required storage capability | Index information of a required AI model |
| CSI compression | 1 | 1 | 1 | 1 |
| CSI prediction | 2 | 2 | 3 | 2 |
| CSI-RS configuration signaling reduction | 2 | 2 | 2 | 1 |
| Beam sweeping matrix prediction | 2 | 1 | 1 | 1 |
| Optimal beam prediction | 1 | 2 | 2 | 2 |
| Terminal device-based positioning enhancement | 1 | 1 | 3 | 2 |

A correspondence between the index information of the AI resource requirement information and the AI resource requirement information (including computing capability information, storage capability information, an AI model information, and the like) may be predefined in a protocol or exchanged between the terminal device and the radio access network device. The correspondence may be stored in the radio access network device and/or the terminal device in a form of a table, a function, a sequence, or the like. The following uses a table as an example for description. Table 2 is an example of a correspondence between index information of a computing capability and computing capability information. Table 3 is an example of a correspondence between index information of a storage capability and storage capability information. Table 4 is an example of a correspondence between index information of an AI model and AI model information. Table 2 to Table 4 show examples of a correspondence between the index information of the AI resource requirement information and the AI resource requirement information. In actual application, Table 2 to Table 4 may alternatively be combined into one table, to define the correspondence between the index information of the AI resource requirement information and the AI resource requirement information. This is not limited in this application.

**Table 2**

| Index information of a computing capability | Computing capability information (Unit: flops) |
|---|---|
| 1 | a1 to a2 |
| 2 | a2 to a3 |
| ... | ... |

Flops is a quantity of floating-point operations performed per second (floating-point operations per second).

**Table 3**

| Index information of a storage capability | Storage capability information |
|---|---|
| 1 | 0 megabytes to 10 megabytes (M) |
| 2 | 10 M to 20 M |
| 3 | 20 M to 30 M |
| ... | ... |

**Table 4**

| Index information of an AI model | AI model information |
|---|---|
| 1 | AI model 1 |
| 2 | AI model 2 |
| ... | ... |

For example, when the first capability information includes CSI compression, a collaboration level 1, index information 1 of a required computing capability, index information 1 of a required storage capability, and index information 1 of a required AI model, the radio access network device may determine, based on Table 2 to Table 4, that AI resource requirement information corresponding to a combination (the CSI compression and the collaboration level 1) includes: required computing capability information is from a1 to a2, required storage capability information is from 0 M to 10 M, and required AI model information is an AI model 1.

In Implementation 2, based on examples in Table 2 to Table 4, both the terminal device and the radio access network device store Table 2 to Table 4. After the terminal device determines the at least one group of AI capability information that needs to be reported and the AI resource requirement information respectively corresponding to the at least one group of AI capability information, the terminal device determines, based on Table 2 to Table 4, the index information of the AI resource requirement information respectively corresponding to the at least one group of AI capability information, and further includes, in the first capability information, the at least one group of AI capability information and the index information of the AI resource requirement information respectively corresponding to the at least one group of AI capability information. After receiving the first capability information, the radio access network device determines, based on Table 2 to Table 4, the AI resource requirement information respectively corresponding to the at least one group of AI capability information.

Implementation 3: The radio access network device determines, based on the first capability information and a predefined correspondence, AI resource requirement information respectively corresponding to at least one piece of AI capability information, where the predefined correspondence includes a correspondence between the at least one piece of AI capability information and the AI resource requirement information.

Specifically, after receiving the first capability information, the radio access network device may determine, by querying the predefined correspondence, the AI resource requirement information respectively corresponding to the at least one piece of AI capability information in the first capability information. The correspondence may be a correspondence between AI capability information and AI resource requirement information. For example, the first capability information includes the AI capability information. In this case, the radio access network device may determine, based on the correspondence between the AI capability information and the AI resource requirement information, AI resource requirement information corresponding to the AI capability information. Alternatively, the correspondence includes a correspondence between AI capability information and index information of AI resource requirement information, and a correspondence between the index information of the AI resource requirement information and AI resource requirement information. For example, the first capability information includes the AI capability information. In this case, the radio access network device may determine, based on the correspondence, index information of AI resource requirement information corresponding to the AI capability information, and further, the radio access network device determines, based on the correspondence between the index information of the AI resource requirement information and the AI resource requirement information, resource requirement information corresponding to the AI capability.

The correspondences may be stored in the radio access network device and/or the terminal device in a form of a table, a function, a sequence, or the like. For example, the AI capability information includes an AI sub-function and a collaboration level, and the AI resource requirement information includes required computing capability information, required storage capability information, and required AI model information. The radio access network device receives the AI capability information of the terminal device, and determines, by querying the correspondence that is between the AI capability information and the index information of the AI resource requirement information and that is shown in Table 1, the index information of the AI resource requirement information corresponding to the AI capability information, and further determines, by querying the correspondence that is between the index information of the AI resource requirement information and the AI resource requirement information and that is shown in Table 2 to Table 4, the AI resource requirement information corresponding to the AI capability information. For example, when the first capability information includes CSI compression and a collaboration level 1, the radio access network device may determine, based on Table 1, that index information of corresponding AI resource requirement information is as follows: Index information of a required computing capability is 1, index information of a required storage capability is 1, and index information of a required AI model is 1; and the radio access network device may further determine, based on Table 2 to Table 4, that AI resource requirement information corresponding to the AI function information is as follows: The required computing capability is from a1 to a2, the required storage capability is from 0 M to 10 M, and the required AI model is the AI model 1.

In Implementation 3, based on examples in Table 1 to Table 4, the radio access network device stores Table 1 to Table 4. The first capability information sent by the terminal device includes the at least one group of AI capability information. After receiving the first capability information, the radio access network device determines, based on Table 1 to Table 4, the AI resource requirement information respectively corresponding to the at least one group of AI capability information.

According to any one of Implementation 1 to Implementation 3, the radio access network device may accurately determine AI resource requirement information corresponding to one group of AI capability information. This helps configure an appropriate AI configuration for the terminal device. In Implementation 1, the terminal device carries, in the first capability information, the at least one group of AI capability information and the AI resource requirement information respectively corresponding to the at least one group of AI capability information, so that the radio access network device can quickly determine, based on the first capability information, the AI resource requirement information respectively corresponding to the at least one group of AI capability information. This can reduce overheads of the radio access network device. In Implementation 2, the terminal device carries, in the first capability information, the at least one group of AI capability information and the index information of the AI resource requirement information respectively corresponding to the at least one group of AI capability information. Because overheads occupied by the index information of the AI resource requirement information are less than those occupied by the AI resource requirement information, signaling overheads between the terminal device and the radio access network device can be reduced, and communication efficiency can be improved. In Implementation 3, the terminal device carries the at least one group of AI capability information in the first capability information. Because the terminal device does not need to determine the AI resource requirement information corresponding to the at least one group of AI capability information or the index information of the corresponding AI resource requirement information, overheads of the terminal device can be reduced. In addition, because the terminal device does not need to carry, in the first capability information, the AI resource requirement information respectively corresponding to the at least one group of AI capability information or the index information of the corresponding AI resource requirement information, signaling overheads between the terminal device and the radio access network device can be reduced, and communication efficiency can be improved.

In a possible implementation, the embodiment in FIG. 2 further includes one or more of the following step 204 to step 206.

Step 204: The terminal device sends second capability information to the radio access network device. Correspondingly, the radio access network device receives the second capability information.

The second capability information indicates information about an AI resource that the terminal device is able to provide. For example, the second capability information may include at least one of maximum computing capability information of the terminal device, maximum storage capability information of the terminal device, maximum battery level information of the terminal device, processing delay information of the terminal device, information about the AI model supported by the terminal device, or information about the AI algorithm supported by the terminal device.

Step 205: The radio access network device determines first AI configuration information of the terminal device based on the second capability information and the AI resource requirement information respectively corresponding to the at least one group of AI capability information.

In an implementation, the radio access network device may alternatively receive the second capability information of the terminal device from another radio access network device or a core network device. The another radio access network device may be a base station, a CU, a DU, or the like adjacent to the radio access network device. This is not limited in embodiments of this application. The core network device may be an AMF network element, an SMF network element, or the like. This is not limited in embodiments of this application. It may be understood that, in this implementation, step 204 may not be performed.

The radio access network device selects one or more groups of AI capability information from the at least one group of AI capability information based on the second capability information and the AI resource requirement information respectively corresponding to the at least one group of AI capability information. AI resource requirement information respectively corresponding to the one or more groups of AI capability information can be met by the second capability information, or it is understood that none of AI resources respectively corresponding to the one or more groups of AI capability information exceeds an AI resource indicated by the second capability information. Then, the radio access network device determines the first AI configuration information based on the one or more groups of AI capability information. Therefore, the first AI configuration information corresponds to the one or more groups of AI capability information.

The following provides descriptions with reference to specific examples. It is assumed that the first capability information includes the foregoing six groups of AI capability information, and it is assumed that AI resource requirements corresponding to the first and third to fifth groups of AI capability information can be met by the AI resource indicated by the second capability information, and however, AI resource requirements corresponding to the second and sixth groups of AI capability information cannot be met by the AI resource indicated by the second capability information. Therefore, the first and third to fifth groups of AI capability information may be used as candidate AI capability information.

Then, the radio access network device generates the first AI configuration information based on one or more groups of AI capability information selected from the first and third to fifth groups of AI capability information. For example, the radio access network device selects the first and fourth groups of AI capability information to generate the first AI configuration information. A specific implementation in which the radio access network device selects one or more groups of AI capability information from a plurality of groups of AI capability information is not limited in embodiments of this application. For example, the radio access network device may randomly select one group of AI capability information, select AI capability information that is the same as or different from AI capability information selected last time based on historical selection, or select all of the plurality of groups of AI capability information.

In an implementation, the first AI configuration information includes the first and fourth groups of AI capability information. Based on this solution, the first AI configuration information includes {CSI compression, collaboration level 1} and {beam sweeping matrix prediction, collaboration level 2}. The CSI compression and the collaboration level 1 form one configuration, and the beam sweeping matrix prediction and the collaboration level 2 form another configuration.

In another implementation, the first AI configuration information is generated based on the first and fourth groups of AI capability information, but is not completely the same as the first and fourth groups of AI capability information. For example, the first AI configuration information includes {CSI compression, collaboration level 1, model 1} and {beam sweeping matrix prediction, collaboration level 1, model 1}. The CSI compression, the collaboration level 1, and the model 1 form one configuration, and the beam sweeping matrix prediction, the collaboration level 1, and the model 1 form another configuration. If the first group of AI capability information in the first capability information reported by the terminal device does not include model information, it indicates that the first group of AI capability information supports any model. Therefore, when the radio access network device generates the first AI configuration information based on the first group of AI capability information, the radio access network device selects the model 1 to be combined with the first group of AI capability information. Herein, that the model 1 is selected is used as only an example. In actual application, a model selection method is not limited. For example, a model may be randomly selected, or a model with minimum overheads is selected. Similarly, when generating the first AI configuration information based on the fourth group of AI capability information, the radio access network device selects the model 1 and the fourth group of AI capability information for combination. That a collaboration level in the fourth group of AI capability information in the first capability information reported by the terminal device is 2 may be understood as follows: The terminal device supports beam sweeping matrix prediction and AI capability information of any collaboration level that is less than and/or equal to the collaboration level 2.

It should be noted that the radio access network device also supports the first AI configuration information. Specifically, the radio access network device supports an AI function, an AI sub-function, a collaboration level, an AI model, an AI algorithm, or the like in the first AI configuration information.

Step 206: The radio access network device sends the first AI configuration information to the terminal device. Correspondingly, the terminal device receives the first AI configuration information.

After receiving the first AI configuration information, the terminal device performs a corresponding AI function or AI sub-function based on the first AI configuration information.

In the foregoing method, because the first AI configuration information is generated based on the at least one group of AI capability information supported by the terminal device, the terminal device supports the first AI configuration information. This helps implement correct AI configuration for the terminal device. In addition, there is a correspondence between a plurality of pieces of AI capability information in a same group. Therefore, when generating the AI configuration information, the radio access network device performs combinational configuration based on the AI capability information in the same group, to avoid generating an AI configuration that is not supported by the terminal device, and help reduce occurrence of an incorrect configuration.

Step 204 and step 202 may be implemented in a same step, or may be implemented in two different steps. This is not limited in this application.

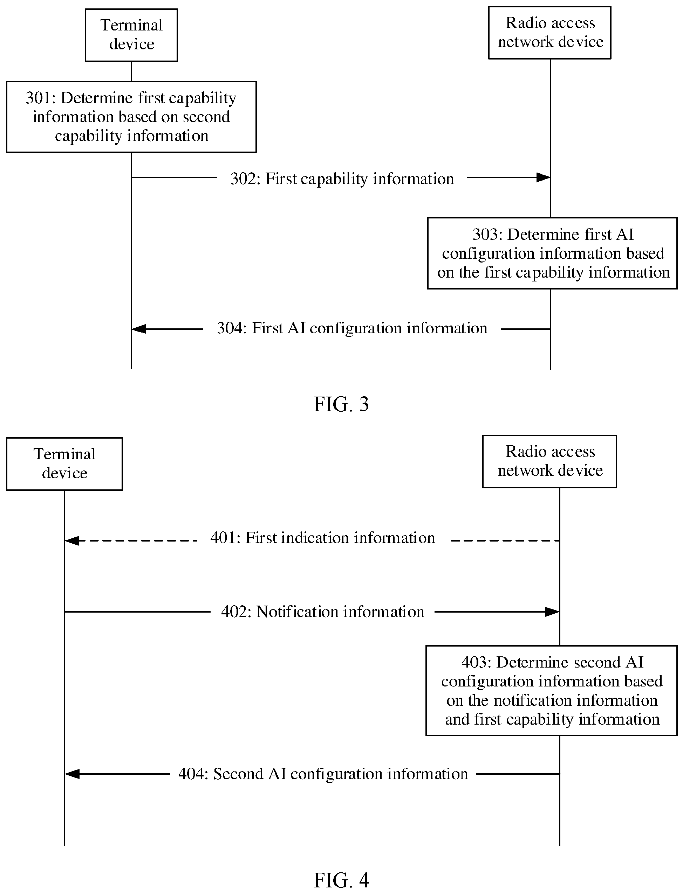

FIG. 3 is a schematic flowchart of a wireless communication method according to an embodiment of this application. The method includes the following steps:
Step 301: A terminal device determines first capability information based on second capability information, where the first capability information includes one group of AI capability information or combination information of at least two groups of AI capability information supported by the terminal device within a range of an AI resource indicated by the second capability information. In an implementation, the second capability information indicates a maximum value of an AI resource supported by the terminal device. For example, the second capability information includes an index value, and the index value may be mapped to the maximum value of the AI resource supported by the terminal device. Alternatively, the second capability information includes a specific value of the maximum value of the AI resource supported by the terminal device.

A meaning of the second capability information is the same as that of the second capability information in the embodiment in FIG. 2. For details, refer to the foregoing descriptions.

A meaning of the first capability information is different from that of the first capability information in the embodiment in FIG. 2. Specifically, in the embodiment in FIG. 2, an AI resource or a sum of AI resources corresponding to the first capability information may exceed a range of an AI resource that the terminal device is able to provide and that is indicated by the second capability information; and in the embodiment in FIG. 2, the radio access network device determines the first AI configuration based on the second capability information, so that an AI resource or a sum of AI resources required by the first AI configuration does not exceed the range of the AI resource indicated by the second capability information. However, in the embodiment in FIG. 3, the first capability information includes the one group of AI capability information or the combination information of the at least two groups of AI capability information supported by the terminal device within the range of the AI resource indicated by the second capability information. Therefore, an AI resource corresponding to the first capability information does not exceed the range of the AI resource that the terminal device is able to provide and that is indicated by the second capability information. It may be understood that the terminal device determines the first capability information based on the second capability information, so that an AI resource required by AI capability information indicated by the first capability information or a sum of AI resources required by a combination of AI capability information indicated by the first capability information does not exceed the range of the AI resource indicated by the second capability information.

For example, the terminal device supports six groups of AI capability information:
a first group of AI capability information is CSI compression and a collaboration level 1;
a second group of AI capability information is CSI prediction and a collaboration level 2;
a third group of AI capability information is CSI-RS configuration signaling reduction and the collaboration level 2;
a fourth group of AI capability information is beam sweeping matrix prediction and the collaboration level 2;
a fifth group of AI capability information is optimal beam prediction and the collaboration level 1; and
a sixth group of AI capability information is terminal device-based positioning enhancement and the collaboration level 1.

For example, the AI resource supported by the terminal device includes a storage capability that can be provided, and a maximum storage capability that can be provided is 100 M. In other words, the maximum storage capability that the terminal device is able to provide and that is indicated by the second capability information is 100 M.

For example, an AI resource corresponding to the first group of AI capability information includes a required storage capability of 30 M, an AI resource corresponding to the second group of AI capability information includes a required storage capability of 40 M, an AI resource corresponding to the third group of AI capability information includes a required storage capability of 50 M, an AI resource corresponding to the fourth group of AI capability information includes a required storage capability of 100 M, an AI resource corresponding to the fifth group of AI capability information includes a required storage capability of 70 M, and an AI resource corresponding to the sixth group of AI capability information includes a required storage capability of 50 M. The terminal device determines, based on the storage capability 100 M of the terminal device and the storage capability information required by the groups of AI capability information, that the supported first capability information includes at least one of {first group of AI capability information (30 M); second group of AI capability information (40 M)}, {first group of AI capability information (30 M); third group of AI capability information (50 M)}, {first group of AI capability information (30 M); fifth group of AI capability information (70 M)}, {first group of AI capability information (30 M); sixth group of AI capability information (50 M)}, {second group of AI capability information (40 M); third group of AI capability information (50 M)}, {second group of AI capability information (30 M); sixth group of AI capability information (50 M)}, {third group of AI capability information (50 M); sixth group of AI capability information (50 M)}, and {fourth group of AI capability information (100 M)}. It can be learned that an AI resource or AI resources corresponding to one group of AI capability information or a combination of a plurality of groups of AI capability information in the first capability information are all within the range of the AI resource that the terminal device is able to provide and that is indicated by the second capability information. In other words, a storage capability required by the one group of AI capability information or a sum of storage capabilities required by the combination of the plurality of groups of AI capability information is less than or equal to 100 M.

It may be understood that, if the second capability information indicates a plurality of types of AI resources, for each type of AI resource, AI resource information corresponding to the one group of AI capability information or a sum of AI resource information corresponding to the combination of the plurality of groups of AI capability information in the first capability information determined by the terminal device is less than or equal to the AI resource that the terminal device is able to provide and that is indicated by the second capability information.

Step 302: The terminal device sends the first capability information to a radio access network device. Correspondingly, the radio access network device receives the first capability information.

Step 303: The radio access network device determines first AI configuration information based on the first capability information.

In an implementation, the radio access network device selects, from the first capability information, one group of AI capability information or a combination of a plurality of groups of AI capability information, to form the first AI configuration information, where the first AI configuration information is the same as the selected one group of AI capability information, is the same as the selected combination of the plurality of groups of AI capability information, or is the same as one or more groups of AI capability information in the selected combination of the plurality of groups of AI capability information. With reference to the example in step 301, the radio access network device may select one or two groups of AI capability information from {first group of AI capability information (30 M); second group of AI capability information (40 M)} to form the first AI configuration information, select one or two groups of AI capability information from {first group of AI capability information (30 M); third group of AI capability information (50 M)} to form the first AI configuration information, select one or two groups of AI capability information from {first group of AI capability information (30 M); fifth group of AI capability information (70 M)} as the first AI configuration information, select one or two groups of AI capability information from {first group of AI capability information (30 M); sixth group of AI capability information (50 M)} to form the first AI configuration information, select one or two groups of AI capability information from {second group of AI capability information (40 M); third group of AI capability information (50 M)} to form the first AI configuration information, select one or two groups of AI capability information from {second group of AI capability information (30 M); sixth group of AI capability information (50 M)} to form the first AI configuration information, select one or two groups of AI capability information from {third group of AI capability information (50 M); sixth group of AI capability information (50 M)} to form the first AI configuration information, or select {fourth group of AI capability information (100 M)} to form the first AI configuration information.

In another implementation, the radio access network device selects, from the first capability information, one group of AI capability information or a combination of a plurality of groups of AI capability information, and generates the first AI configuration information based on the selected one group of AI capability information or the selected combination of the plurality of groups of AI capability information, where the first AI configuration information is not completely the same as the selected AI capability information. Specifically, the selected AI capability information and other information corresponding to the AI capability information may form the first AI configuration information. The example in step 301 is used as an example. For example, the radio access network device selects {first group of AI capability information (30 M); second group of AI capability information (40 M)} from the first capability information, and the first AI configuration information determined by the radio access network device includes {CSI compression, collaboration level 1, AI model 1} and {CSI prediction, collaboration level 2, AI model 2}. It can be learned that in addition to the first group of AI capability information and the second group of AI capability information, the first AI configuration information includes the AI model 1 corresponding to the first group of AI capability information and the AI model 2 corresponding to the second group of AI capability information. Herein, that the model 1 is selected for the first group of AI capability information and the model 2 is selected for the second group of AI capability information is merely an example. In actual application, a model selection method is not limited. For example, a model may be randomly selected, or a model with minimum overheads may be selected.

It should be noted that the radio access network device also supports the first AI configuration information. Specifically, the radio access network device supports an AI function, an AI sub-function, a collaboration level, an AI model, an AI algorithm, and the like in the first AI configuration information.

In an implementation, the radio access network device may receive the first capability information of the terminal device from the terminal device, or may receive the first capability information of the terminal device from another radio access network device or a core network device. The core network device herein may be an AMF network element, an SMF network element, or the like. It may be understood that, in this implementation, step 301 and step 302 may not be performed.

Step 304: The radio access network device sends the first AI configuration information to the terminal device. Correspondingly, the terminal device receives the first AI configuration information.

After receiving the first AI configuration information, the terminal device performs a corresponding AI function and AI sub-function based on the first AI configuration information.

In the foregoing method, because the first AI configuration information is generated based on the AI capability information supported by the terminal device, the terminal device supports the first AI configuration information. This helps implement correct AI configuration for the terminal device. In addition, there is a correspondence between a plurality of pieces of AI capability information in a same group. Therefore, when generating the first AI configuration information, the radio access network device performs combinational configuration based on the AI capability information in the same group, to avoid generating an AI configuration that is not supported by the terminal device, and help reduce occurrence of an incorrect configuration.

FIG. 4 is a schematic flowchart of still another wireless communication method according to an embodiment of this application. The method is used to send updated AI configuration information to a terminal device. The method may be implemented in combination with the embodiment in FIG. 2 or FIG. 3, or may be implemented separately. The method includes the following steps:
Step 401: A radio access network device sends first indication information to the terminal device.

The first indication information indicates trigger configuration information for reporting notification information, and the first indication information includes a first threshold and/or a second threshold. A value of the first threshold and/or a value of the second threshold may be predefined in a protocol.

Step 401 is an optional step. If step 401 is not performed, the first threshold and the second threshold may be preconfigured for the terminal device.

Step 402: The terminal device determines that a trigger condition corresponding to the first indication information is met, and sends the notification information to the radio access network device.

The notification information includes at least one of information about an AI resource occupied by the terminal device, information about a remaining AI resource of the terminal device, and expected AI configuration information. The information about the AI resource occupied by the terminal device includes but is not limited to one or more of the following: an occupied computing resource, an occupied storage resource, and a used battery level. The information about the remaining AI resource of the terminal device includes but is not limited to one or more of the following: a remaining computing resource, a remaining storage resource, and a remaining battery level. The expected AI configuration information includes but is not limited to one or more of the following: an AI function, an AI sub-function, a collaboration level, an AI model, or an AI algorithm.

In an implementation, the trigger condition includes: The information about the AI resource occupied by the terminal device is greater than or equal to the first threshold, and/or the information about the remaining AI resource of the terminal device is less than or equal to the second threshold. For example, when the information about the AI resource occupied by the terminal device includes the occupied computing resource and the occupied storage resource, the first threshold includes a threshold of the occupied computing resource and a threshold of the occupied storage resource. For example, if the information about the remaining AI resource of the terminal device includes the remaining computing resource and the remaining storage resource, the second threshold includes a threshold of the remaining computing resource and a threshold of the remaining storage resource.

Step 403: The radio access network device determines second AI configuration information based on the notification information and first capability information.

The second AI configuration information may be understood as updated AI configuration information.

In an implementation, the radio access network device stores historical AI configuration information, and the historical AI configuration information may be AI configuration information last configured for the terminal device. When the radio access network device needs to update the AI configuration information, the radio access network device may determine the second AI configuration information based on the historical AI configuration information, the notification information, and the first capability information.

If the notification information includes the expected AI configuration information, the radio access network device preferentially considers generating the updated AI configuration information, namely, the second AI configuration information, for the terminal device based on the expected AI configuration information.

In an implementation, when the embodiment in FIG. 4 is implemented in combination with the embodiment in FIG. 2 or FIG. 3, the second AI configuration information may correspond to one or more groups of AI capability information in the first capability information. In other words, the second AI configuration information is generated based on the one or more groups of AI capability information in the first capability information. Based on the method, it may be understood that the second AI configuration information is an update to the first AI configuration information in the embodiment in FIG. 2 or FIG. 3.

Step 404: The radio access network device sends the second AI configuration information to the terminal device.

In the foregoing solution, the AI configuration information may be updated for the terminal device, so that the terminal device uses an AI function more properly and effectively based on the updated AI configuration information, thereby meeting a communication requirement between the terminal device and the radio access network device and improving efficiency of collaboration between the terminal device and the radio access network device.

In an implementation, after the radio access network device configures the AI configuration information for the terminal device, if the terminal device does not need to use the configured AI configuration information, the radio access network device may deactivate the AI configuration information that has been configured on the terminal device. The following describes an implementation of triggering deactivation of the AI configuration information of the terminal device. For example, when determining that the AI configuration information needs to be deactivated, the terminal device sends second indication information to the radio access network device, where the second indication information indicates to deactivate the AI configuration information of the terminal device, and the radio access network device may deactivate the AI configuration information of the terminal device based on the second indication information. Alternatively, the second indication information may indicate that the terminal device expects to deactivate an AI function, and the radio access network device may deactivate the corresponding AI function on the terminal device. The method for deactivating the AI configuration information on the terminal device may be independently implemented, or may be implemented in combination with the embodiment in FIG. 2, FIG. 3, or FIG. 4. This is not limited in this application.

In a possible implementation, when the radio access network device includes a CU and a DU, the CU is responsible for exchanging a radio resource control (radio resource connection, RRC) message with the terminal device, and the DU is responsible for processing information received from the terminal device, and generating information and sending the generated information to the terminal device via the CU.

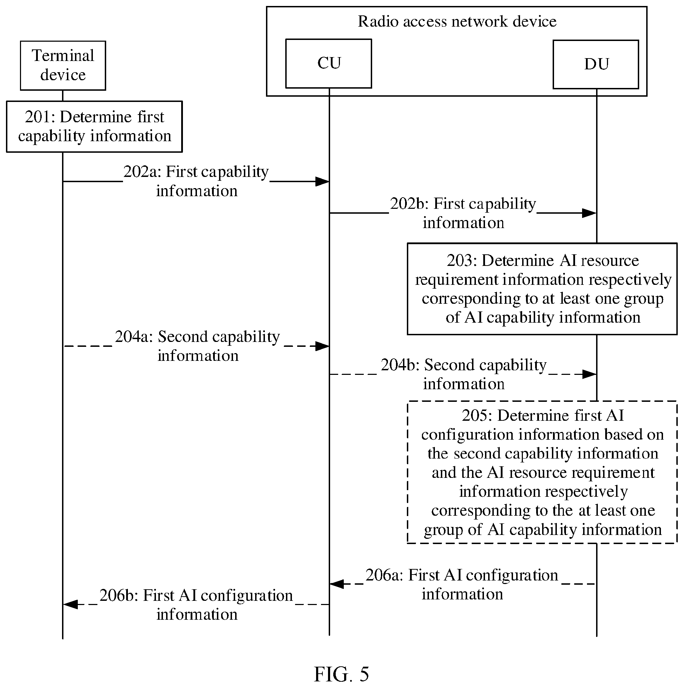

For example, when the radio access network device includes the CU and the DU, the embodiment in FIG. 2 may be implemented according to the embodiment in FIG. 5. Specifically, step 202 in FIG. 2 corresponds to step 202a and step 202b in FIG. 5, step 204 in FIG. 2 corresponds to step 204a and step 204b in FIG. 5, step 206 in FIG. 2 corresponds to step 206a and step 206b in FIG. 5, and steps 203 and 205 in FIG. 2 are performed by the DU in FIG. 5.

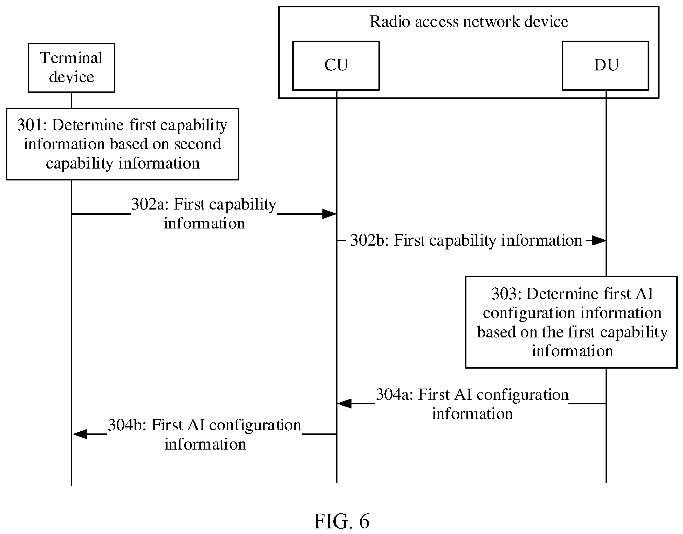

For example, when the radio access network device includes the CU and the DU, the embodiment in FIG. 3 may be implemented according to the embodiment in FIG. 6. Specifically, step 302 in FIG. 3 corresponds to step 302a and step 302b in FIG. 6, step 304 in FIG. 3 corresponds to step 304a and step 304b in FIG. 6, and step 303 in FIG. 3 is performed by the DU in FIG. 6.

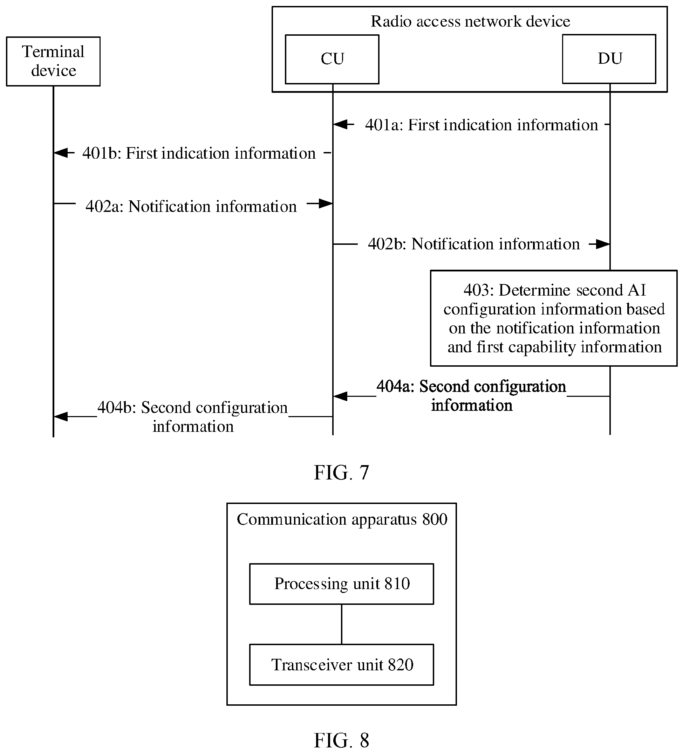

For example, when the radio access network device includes the CU and the DU, the embodiment in FIG. 4 may be implemented according to the embodiment in FIG. 7. Specifically, step 401 in FIG. 4 corresponds to step 401a and step 401b in FIG. 7, step 402 in FIG. 4 corresponds to step 402a and step 402b in FIG. 7, step 404 in FIG. 4 corresponds to step 404a and step 404b in FIG. 7, and step 403 in FIG. 4 is performed by the DU in FIG. 7.

In still another possible implementation, the radio access network device (the CU or the DU) may be further divided into a first network element having an AI decision function and a second network element having an AI implementation function. The first network element may be referred to as an AI controller or a near real-time radio access network intelligent controller. The second network element is configured to: manage sending or receiving of information between the second network element and another access network device or terminal device, and forward related information to the first network element. The first network element may make a decision based on the foregoing information, and send determined configuration information to the second network element, so that the second network element performs a subsequent operation based on the configuration information, for example, sending the configuration information to another access network device or the terminal device.

For example, when the radio access network device includes the first network element and the second network element, in the foregoing embodiment, operations in which the radio access network device receives the first capability information or receives the first capability information and the second capability information, and determines the AI resource requirement information respectively corresponding to the at least one group of AI capability information or determines the first AI configuration information may include:
The second network element receives the first capability information, or receives the first capability information and the second capability information;
the second network element sends the received first capability information to the first network element, or receives a part or all of the first capability information and the second capability information;
the first network element determines, based on the received first capability information or the part of or all of the received first capability information and the received second capability information, the AI resource requirement information respectively corresponding to the at least one group of AI capability information, or determines the first AI configuration information; and
the first network element sends, to the second network element, the AI resource requirement information respectively corresponding to the at least one group of AI capability information, or determines the first AI configuration information.

It may be understood that, in embodiments of this application, the terminal device and/or the radio access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

It may be understood that, to implement functions in the foregoing embodiments, the radio access network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on particular application scenarios and design constraints of the technical solutions.

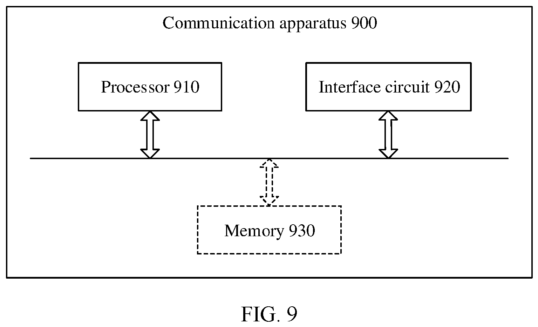

FIG. 8 and FIG. 9 each are a diagram of a structure of a possible communication apparatus according to an embodiment of this application. These communication apparatuses may be configured to implement functions of the terminal device or the radio access network device in the foregoing method embodiments. Therefore, these communication apparatuses can also implement beneficial effects of the foregoing method embodiments. In embodiments of this application, the communication apparatuses each may be the terminal device shown in FIG. 1, may be the radio access network device shown in FIG. 1, or may be a module (for example, a chip) used in the terminal device or the radio access network device.

A communication apparatus 800 shown in FIG. 8 includes a processing unit 810 and a transceiver unit 820. The communication apparatus 800 is configured to implement functions of the terminal device or the radio access network device in the foregoing method embodiments.

When the communication apparatus 800 is configured to implement functions of the radio access network device or the DU in embodiments in FIG. 2, FIG. 4, FIG. 5, and FIG. 7, the transceiver unit 820 is configured to receive first capability information of a terminal device, where the first capability information includes at least one group of AI capability information supported by the terminal device, and the processing unit 810 is configured to determine, based on the first capability information, AI resource requirement information respectively corresponding to the at least one group of AI capability information.

In a possible implementation, the processing unit 810 is specifically configured to determine, based on the first capability information and a predefined correspondence, AI resource requirement information respectively corresponding to at least one piece of AI capability information, where the predefined correspondence includes a correspondence between the at least one piece of AI capability information and the AI resource requirement information.

In a possible implementation, the transceiver unit 820 is further configured to receive second capability information of the terminal device, where the second capability information indicates information about an AI resource that the terminal device is able to provide; the processing unit 810 is further configured to: determine first AI configuration information based on the second capability information and the AI resource requirement information respectively corresponding to the at least one group of AI capability information, where the first AI configuration information corresponds to one or more groups of AI capability information in the at least one group of AI capability information; and the radio access network device sends the first AI configuration information to the terminal device.

In a possible implementation, the transceiver unit 820 is further configured to receive notification information from the terminal device, where the notification information includes at least one of information about an AI resource occupied by the terminal device, information about a remaining AI resource of the terminal device, and expected AI configuration information.

In a possible implementation, the processing unit 810 is further configured to determine second AI configuration information based on the notification information and the first capability information, where the second AI configuration information corresponds to one or more groups of AI capability information in the at least one group of AI capability information; and the transceiver unit 820 is further configured to send the second AI configuration information to the terminal device.

In a possible implementation, the transceiver unit 820 is further configured to send first indication information to the terminal device, where the first indication information indicates a trigger condition for reporting the notification information.

In a possible implementation, the transceiver unit 820 is further configured to receive second indication information from the terminal device, where the second indication information indicates to deactivate the AI configuration information of the terminal device; and the radio access network device deactivates the AI configuration information of the terminal device based on the second indication information.

In a possible implementation, the transceiver unit 820 is specifically configured to receive the first capability information from another radio access network device, the terminal device, or a core network device.

In a possible implementation, the transceiver unit 820 is specifically configured to receive the second capability information from another radio access network device, the terminal device, or a core network device.

When the communication apparatus 800 is configured to implement functions of the terminal device in embodiments in FIG. 2, FIG. 4, FIG. 5, and FIG. 7, the processing unit 810 is configured to determine first capability information, where the first capability information includes at least one group of AI capability information supported by the terminal device, and the transceiver unit 820 is configured to send the first capability information to a radio access network device.

In a possible implementation, the transceiver unit 820 is further configured to: send second capability information to the radio access network device, where the second capability information indicates information about an AI resource that the terminal device is able to provide; and receive first AI configuration information from the radio access network device, where the first AI configuration information is determined based on the second capability information and the AI resource requirement information respectively corresponding to the at least one group of AI capability information, and the first AI configuration information corresponds to one or more groups of AI capability information in the at least one group of AI capability information.

In a possible implementation, the transceiver unit 820 is further configured to: when the processing unit 810 determines that a trigger condition is met, send notification information to the radio access network device, where the notification information includes at least one of information about an AI resource occupied by the terminal device, information about a remaining AI resource of the terminal device, and expected AI configuration information, and the trigger condition includes: The information about the AI resource occupied by the terminal device is greater than a first threshold, and/or the information about the remaining AI resource of the terminal device is less than a second threshold.

In a possible implementation, the transceiver unit 820 is further configured to receive second AI configuration information from the radio access network device, where the second AI configuration information is determined based on the notification information and the first capability information, and the second AI configuration information corresponds to one or more groups of AI capability information in the at least one group of AI capability information.

In a possible implementation, the transceiver unit 820 is further configured to receive first indication information from the radio access network device, where the first indication information indicates the trigger condition for reporting the notification information, and the first indication information includes the first threshold and/or the second threshold.

In a possible implementation, the transceiver unit 820 is further configured to send second indication information to the radio access network device, where the second indication information indicates to deactivate the AI configuration information of the terminal device.

When the communication apparatus 800 is configured to implement functions of the radio access network device or the DU in embodiments in FIG. 3, FIG. 4, FIG. 6, and FIG. 7, the transceiver unit 820 is configured to receive first capability information of a terminal device, where the first capability information includes one group of AI capability information or combination information of at least two groups of AI capability information supported by the terminal device within a range of an AI resource indicated by second capability information, and the second capability information indicates information about an AI resource that the terminal device is able to provide; the processing unit 810 is configured to determine first AI configuration information based on the first capability information, where the first AI configuration information corresponds to one or more groups of AI capability information in the one group of AI capability information or the combination information of the at least two groups of AI capability information; and the transceiver unit 820 is further configured to send the first AI configuration information to the terminal device.

In a possible implementation, the transceiver unit 820 is further configured to receive notification information from the terminal device, where the notification information includes at least one of information about an AI resource occupied by the terminal device, information about a remaining AI resource of the terminal device, and expected AI configuration information.

In a possible implementation, the processing unit 810 is further configured to determine second AI configuration information based on the notification information and the first capability information, where the second AI configuration information corresponds to one or more groups of AI capability information in the one group of AI capability information or the combination information of the at least two groups of AI capability information; and the transceiver unit 820 is further configured to send the second AI configuration information to the terminal device.

In a possible implementation, the transceiver unit 820 is further configured to send first indication information to the terminal device, where the first indication information indicates a trigger condition for reporting the notification information.

In a possible implementation, the transceiver unit 820 is further configured to receive second indication information from the terminal device, where the second indication information indicates to deactivate the AI configuration information of the terminal device; and the processing unit 810 is further configured to deactivate the AI configuration information of the terminal device based on the second indication information.

In a possible implementation, the transceiver unit 820 is specifically configured to receive the first capability information from another radio access network device, the terminal device, or a core network device.

When the communication apparatus 800 is configured to implement functions of the terminal device in embodiments in FIG. 3, FIG. 4, FIG. 6, and FIG. 7, the processing unit 810 is configured to determine first capability information based on second capability information, where the first capability information includes one group of AI capability information or combination information of at least two groups of AI capability information supported by the terminal device within a range of an AI resource indicated by the second capability information, and the second capability information indicates information about an AI resource that the terminal device is able to provide; and the transceiver unit 820 is configured to send the first capability information to a radio access network device.

In a possible implementation, the transceiver unit 820 is further configured to: when the processing unit 810 determines that a trigger condition is met, send notification information to the radio access network device, where the notification information includes at least one of information about an AI resource occupied by the terminal device, information about a remaining AI resource of the terminal device, and expected AI configuration information, and the trigger condition includes: The information about the AI resource occupied by the terminal device is greater than a first threshold, and/or the information about the remaining AI resource of the terminal device is less than a second threshold.

In a possible implementation, the transceiver unit 820 is further configured to receive second AI configuration information from the radio access network device, where the second AI configuration information is determined based on the notification information and the first capability information, and the second AI configuration information corresponds to one or more groups of AI capability information in the one group of AI capability information or the combination information of the at least two groups of AI capability information.

In a possible implementation, the transceiver unit 820 is further configured to receive first indication information from the radio access network device, where the first indication information indicates the trigger condition for reporting the notification information, and the first indication information includes the first threshold and/or the second threshold.

In a possible implementation, the transceiver unit 820 is further configured to send second indication information to the radio access network device, where the second indication information indicates to deactivate the AI configuration information of the terminal device.

For more detailed descriptions of the processing unit 810 and the transceiver unit 820, directly refer to related descriptions in the foregoing method embodiments. Details are not described herein again.

A communication apparatus 900 shown in FIG. 9 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930 that is configured to store instructions executed by the processor 910, input data required by the processor 910 to run the instructions, or data generated after the processor 910 runs the instructions.

When the communication apparatus 900 is configured to implement the foregoing method embodiments, the processor 910 is configured to implement functions of the processing unit 810, and the interface circuit 920 is configured to implement functions of the transceiver unit 820.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a radio access network device to the terminal device. Alternatively, the chip in the terminal device sends information to another module (for example, a radio frequency module or an antenna) in the terminal device, where the information is sent by the terminal device to a radio access network device.

When the communication apparatus is a module used in a radio access network device, the module in the radio access network device implements functions of the radio access network device in the foregoing method embodiments. The module in the radio access network device receives information from another module (for example, a radio frequency module or an antenna) in the radio access network device, where the information is sent by a terminal device to the radio access network device. Alternatively, the module in the radio access network device sends information to another module (for example, a radio frequency module or an antenna) in the radio access network device, where the information is sent by the radio access network device to a terminal device. The module in the radio access network device herein may be a baseband chip of the radio access network device, or may be a DU or another module. The DU herein may be a DU in an open radio access network (open radio access network, O-RAN) architecture.

In an implementation, this application provides a communication system, including a radio access network device and a terminal device. The radio access network device may implement functions of the radio access network device or the DU in embodiments in FIG. 2, FIG. 4, FIG. 5, and FIG. 7, and the terminal device may implement functions of the terminal device in embodiments in FIG. 2, FIG. 4, FIG. 5, and FIG. 7.

In an implementation, this application provides a base station including a CU and a DU. The DU may implement functions of the DU in embodiments in FIG. 2, FIG. 4, FIG. 5, and FIG. 7.

It may be understood that a processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented by the processor by executing software instructions. The software instructions may include a corresponding software module, and the software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a radio access network device or a terminal device. Certainly, the processor and the storage medium may alternatively exist in the radio access network device or the terminal device as discrete components.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer programs or instructions. A computer program (Computer Program) is a group of instructions that instruct each step of an electronic computer or another device with a message processing capability, is usually written in a programming language, and runs on a target architecture. When the computer programs or the instructions are loaded and executed on a computer, procedures or functions in embodiments of this application are all or partially executed. The computer may be a general-purpose computer, a dedicated computer, a computer network, a radio access network device, a terminal device, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid state drive. The computer-readable storage medium may be a volatile or non-volatile storage medium, or may include two types of storage media: a volatile storage medium and a non-volatile storage medium.

The protocol in this application may be a communication protocol or a standard, for example, a 3GPP communication protocol.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in embodiments of this application, the terminal device and/or the radio access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. A character "/" in text descriptions of this application usually indicates an "or" relationship between associated objects, and a character "/" in a formula in this application indicates a "division" relationship between associated objects.

It may be understood that various numbers in embodiments of this application are merely used for distinguishing for ease of description, and are not used to limit the scope of embodiments of this application. Sequence numbers of the foregoing processes do not mean execution sequences, and the execution sequences of the processes should be determined based on functions and internal logic of the processes.

## Claims

1. A wireless communication method, wherein the method is applied to a radio access network device, and comprises:
receiving first capability information of a terminal device, wherein the first capability information comprises at least one group of artificial intelligence AI capability information supported by the terminal device; and
determining, based on the first capability information, AI resource requirement information respectively corresponding to the at least one group of AI capability information.

2. The method according to claim 1, wherein each group of AI capability information comprises at least one of an AI function, an AI sub-function, a collaboration level, an AI model, or an AI algorithm supported by the terminal device.

3. The method according to claim 1 or 2, wherein each group of AI capability information comprises at least two pieces of AI capability information, and there is a correspondence between the at least two pieces of AI capability information.

4. The method according to any one of claims 1 to 3, wherein the first capability information further comprises:
the AI resource requirement information respectively corresponding to the at least one group of AI capability information; or
index information of the AI resource requirement information respectively corresponding to the at least one group of AI capability information.

5. The method according to any one of claims 1 to 3, wherein the determining, based on the first capability information, AI resource requirement information respectively corresponding to the at least one group of AI capability information comprises:
determining, based on the first capability information and a predefined correspondence, AI resource requirement information respectively corresponding to at least one piece of AI capability information, wherein the predefined correspondence comprises a correspondence between the at least one piece of AI capability information and the AI resource requirement information.

6. The method according to any one of claims 1 to 5, wherein the method further comprises:
receiving second capability information of the terminal device, wherein the second capability information indicates information about an AI resource that the terminal device is able to provide;
determining first AI configuration information based on the second capability information and the AI resource requirement information respectively corresponding to the at least one group of AI capability information, wherein the first AI configuration information corresponds to one or more groups of AI capability information in the at least one group of AI capability information; and
sending the first AI configuration information to the terminal device.

7. The method according to claim 6, wherein the information about the AI resource that the terminal device is able to provide comprises at least one of maximum computing capability information of the terminal device, maximum storage capability information of the terminal device, maximum battery level information of the terminal device, processing delay information of the terminal device, information about the AI model supported by the terminal device, or information about the AI algorithm supported by the terminal device.

8. The method according to any one of claims 1 to 7, wherein the method further comprises:
receiving notification information from the terminal device, wherein the notification information comprises at least one of information about an AI resource occupied by the terminal device, information about a remaining AI resource of the terminal device, and expected AI configuration information.

9. The method according to claim 8, wherein the method further comprises:
determining second AI configuration information based on the notification information and the first capability information, wherein the second AI configuration information corresponds to one or more groups of AI capability information in the at least one group of AI capability information; and
sending the second AI configuration information to the terminal device.

10. The method according to claim 8 or 9, wherein the method further comprises:
sending first indication information to the terminal device, wherein the first indication information indicates a trigger condition for reporting the notification information.

11. The method according to any one of claims 1 to 7, wherein the method further comprises:
receiving second indication information from the terminal device, wherein the second indication information indicates to deactivate the AI configuration information of the terminal device; and
deactivating the AI configuration information of the terminal device based on the second indication information.

12. The method according to any one of claims 1 to 11, wherein the receiving first capability information of a terminal device comprises:
receiving the first capability information from another radio access network device, the terminal device, or a core network device.

13. A wireless communication method, wherein the method is applied to a terminal device, and comprises:
determining first capability information, wherein the first capability information comprises at least one group of artificial intelligence AI capability information supported by the terminal device; and
sending the first capability information to a radio access network device.

14. The method according to claim 13, wherein each group of AI capability information comprises at least one of an AI function, an AI sub-function, a collaboration level, an AI model, or an AI algorithm supported by the terminal device.

15. The method according to claim 13 or 14, wherein each group of AI capability information comprises at least two pieces of AI capability information, and there is a correspondence between the at least two pieces of AI capability information.

16. The method according to any one of claims 13 to 15, wherein the first capability information further comprises:
AI resource requirement information respectively corresponding to the at least one group of AI capability information; or
index information of AI resource requirement information respectively corresponding to the at least one group of AI capability information.

17. The method according to any one of claims 13 to 16, wherein the method further comprises:
sending second capability information to the radio access network device, wherein the second capability information indicates information about an AI resource that the terminal device is able to provide; and
receiving first AI configuration information from the radio access network device, wherein the first AI configuration information is determined based on the second capability information and the AI resource requirement information respectively corresponding to the at least one group of AI capability information, and the first AI configuration information corresponds to one or more groups of AI capability information in the at least one group of AI capability information.

18. The method according to claim 17, wherein the information about the AI resource that the terminal device is able to provide comprises at least one of maximum computing capability information of the terminal device, maximum storage capability information of the terminal device, maximum battery level information of the terminal device, processing delay information of the terminal device, information about the AI model supported by the terminal device, or information about the AI algorithm supported by the terminal device.

19. The method according to any one of claims 13 to 18, wherein the method further comprises:
determining that a trigger condition is met, and sending notification information to the radio access network device, wherein the notification information comprises at least one of information about an AI resource occupied by the terminal device, information about a remaining AI resource of the terminal device, and expected AI configuration information; and
the trigger condition comprises: the information about the AI resource occupied by the terminal device is greater than a first threshold, and/or the information about the remaining AI resource of the terminal device is less than a second threshold.

20. The method according to claim 19, wherein the method further comprises:
receiving second AI configuration information from the radio access network device, wherein the second AI configuration information is determined based on the notification information and the first capability information, and the second AI configuration information corresponds to one or more groups of AI capability information in the at least one group of AI capability information.

21. The method according to claim 19 or 20, wherein the method further comprises:
receiving first indication information from the radio access network device, wherein the first indication information indicates the trigger condition for reporting the notification information, and the first indication information comprises the first threshold and/or the second threshold.

22. The method according to any one of claims 13 to 18, wherein the method further comprises:
sending second indication information to the radio access network device, wherein the second indication information indicates to deactivate the AI configuration information of the terminal device.

23. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 12 or the method according to any one of claims 13 to 22 by using a logic circuit or by executing code instructions.

24. A computer-readable storage medium, wherein the storage medium stores a computer program or instructions, and when the computer program or the instructions are executed by a communication apparatus, the method according to any one of claims 1 to 12 or the method according to any one of claims 13 to 22 is implemented.

25. A computer program product, wherein the computer program product comprises a computer program or instructions, and when the computer program or the instructions are run by a communication apparatus, the method according to any one of claims 1 to 12 or the method according to any one of claims 13 to 22 is performed.
